# EUROPÄISCHE PATENTSCHRIFT

(11) **EP 1 561 955 B1**
(45) Veröffentlichungstag und Bekanntmachung des Hinweises auf die Patenterteilung: **27.09.2006**
(21) Anmeldenummer: 05100532.0
(22) Anmeldetag: 27.01.2005
(51) Int. Cl.: F16B 7/04

(54) **Verbindungsvorrichtung**
Connecting device
Dispositif d'attache

(30) Priorität: 09.02.2004 DE 102004006209
(43) Veröffentlichungstag der Anmeldung: 10.08.2005
(73) Patentinhaber: HILTI Aktiengesellschaft, 9494 Schaan (LI)
(72) Erfinder: Herb, Armin, 86974, Apfeldorf (DE)
(74) Vertreter: Wildi, Roland

(56) Entgegenhaltungen:
- DE-A1- 10 000 092
- US-A- 5 548 932

## Beschreibung

### Technisches Gebiet

Die Erfindung betrifft eine Verbindungsvorrichtung zum Verbinden von Montageschienen im Kreuzstoss mit einem Verbinder, der ein Mittelteil, das zwei im Wesentlichen parallel zueinander ausgerichtete Schenkel und einen die beiden Schenkel verbindenden Verbindungsabschnitt aufweist, zum zumindest teilweisen Umgreifen einer ersten Montageschiene und der zumindest ein, an einem Schenkel des Mittelteils angeordnetes Aufnahmeelement beinhaltet, das zwei im Wesentlichen parallel zueinander ausgerichtete Schenkel und einen die beiden Schenkel verbindenden Verbindungsabschnitt aufweist und in das eine zweite, mit der ersten Montageschiene auf Stoss zu befestigende Montageschiene einlegbar ist. Die Verbindungsvorrichtung umfasst weiter ein Fixierelement, das an den Schenkeln des Aufnahmeelementes festlegbar ist und mittels eines Befestigungsmittels die zweite Montageschiene mit der Verbindungsvorrichtung verspannt. Des Weiteren betrifft die Erfindung einen Verbinder, insbesondere für eine solche Verbindungsvorrichtung.

### Stand der Technik

Montageschienen an sich sind bekannt und dienen beispielsweise der Befestigung von Anbindeteilen oder Leitungssträngen. Infolge der Vielzahl der Verwendungsmöglichkeiten der Montageschienen werden diese über Verbindungsteile und -vorrichtungen auch zu Tragwerken zusammengestellt.

Beispielsweise werden in Stahl- und Stahlbetonhallen zur Schaffung von flexiblen Anbindemöglichkeiten an die oftmals umfangreiche Haustechnik und an die Prozessmedien, wie beispielsweise Strom, Druckluft und Wasser, Zwischenebenen in Form einer Rasterdecke aus Montageschienen erstellt, welche von den Dachträgern der Hatte abgehängt werden. Mittels Montageschienen erstellte Rasterdecken können einfach an sich ändernde Belastungen, z. B. durch Anordnung von schweren Leitungen oder infolge von statischen Erfordernissen, durch Austausch der entsprechenden Montageschienen angepasst werden.

Üblicherweise umfassen die Rasterdecken in einer Richtung angeordnete Hauptträger, zwischen welchen Abschnitte von Montageschienen als Querträger im Kreuzstoss, z. B. als Auflager oder zur Versteifung der Rasterdecke, angeordnet werden. Rasterdecken wie auch andere mittels Montageschienen erstellte Tragwerke bieten eine Vielzahl von Möglichkeiten zur Befestigung beispielsweise von Rohrleitungen an den Montageschienen mit bekannten Anbindeteilen, wie Winkel oder Rohrschellen.

Aus der DE 100 00 92 A1 ist eine Verbindungsvorrichtung zum Verbinden von Montageschienen im Kreuzstoss bekannt, wobei die Verbindungsvorrichtung einen U-förmigen Verbinder zum Umgreifen einer ersten Montageschiene und zumindest ein an einem Schenkel des Verbinders angeordneten U-förmiges Aufnahmeelement umfasst, in das eine zweite, mit der ersten Montageschiene auf Stoss zu befestigende Montageschiene einlegbar ist. Die Verbindungsvorrichtung umfasst weiter als Fixierelement für die zu befestigende Montageschiene einen Bügel, der an Hinterschneidungen an den freien Rändern der Schenkel des Aufnahmeelementes festlegbar ist und mittels einer als Befestigungsmittel ausgebildeten Schienenmutter die zweite Montageschiene mit der Verbindungsvorrichtung verspannt.

Nachteilig an der bekannten Lösung ist, dass nur Montageschienen, die eine bestimmte Höhe aufweisen, mittels dieser Verbindungsvorrichtung mit einer Montageschiene im Kreuzstoss verbindbar sind. Für unterschiedliche Montageschienen mit verschiedenen Höhenabmessungen ist eine Vielzahl von unterschiedlich ausgebildeten Verbindungsvorrichtungen erforderlich, welche aufwändig in der Herstellung sind und einen grossen logistischen Aufwand beim Hersteller, Händler sowie auch beim Anwender bedingen.

### Darstellung der Erfindung

Aufgabe der Erfindung ist es, eine Verbindungsvorrichtung zu schaffen, die den Anschluss von Montageschienen erlaubt, die unterschiedliche Höhen aufweisen können, und die einfach in der Anwendung ist.

Die Aufgabe ist durch die Merkmale des unabhängigen Anspruchs gelöst. Vorteilhafte Weiterbildungen sind in den Unteransprüchen dargelegt.

Gemäss der Erfindung sind an beiden Schenkeln des Aufnahmeelementes mehrere zueinander beabstandete, einander gegenüberliegende und schlitzartig ausgebildete Aufnahmen für das Fixierelement zur Fixierung von in der Höhe unterschiedlich ausgebildeten und in das zumindest eine Aufnahmeelement eingelegten Montageschienen vorgesehen. Die Aufnahmen an den, dem Schenkel des Mittelteils abgewandten Rändern des Aufnahmeelementes sind offen ausgebildet. In einem Abstand von diesen Rändern weisen die Aufnahmen, zur Schaffung einer Verriegelungsnase, in der von dem Schenkel des Aufnahmeelementes aufgespannten Ebene, eine Erweiterung auf. Diese Erweiterung ist vorzugsweise dreieckig ausgebildet.

Die an den Schenkeln des zumindest einen Aufnahmeelementes angeordneten Aufnahmen sind in verschiedenen Abständen zum Verbindungsabschnitt des zumindest einen Aufnahmeelementes angeordnet, welche den Höhen der mit der Verbindungsvorrichtung zu verspannenden Montageschienen entsprechen. Das zumindest eine Aufnahmeelement weist im Querschnitt eine im Wesentlichen U-förmige Ausgestaltung auf. Das Fixierelement wird in die einseitig offenen Aufnahmen des zumindest einen Aufnahmeelementes eingeschoben, welche der, in das zumindest eine Aufnahmeelement eingelegte Montageschiene am nächsten liegt. Die Öffnungen der Aufnahmen sind vorteilhafterweise im Wesentlichen parallel zu der, von dem Verbindungsabschnitt des zumindest einen Aufnahmeelementes aufgespannten Ebene ausgerichtet, wobei die vorzugsweise dreieckige Erweiterung der Aufnahmen in Richtung des Verbindungsabschnitts des zumindest einen Aufnahmeelementes ausgebildet sind. In einer Variante dazu sind die Schlitze schräg, von dem Rand der Aufnahmeelemente in Richtung der, von dem Verbindungsabschnitt des zumindest einen Aufnahmeelementes aufgespannten Ebene abfallend ausgerichtet, wobei die vorzugsweise dreieckige Erweiterung der Aufnahmen ebenfalls in Richtung des Verbindungsabschnitts des zumindest einen Aufnahmeelementes ausgebildet sind und einen geraden Abschnitt aufweisen, der im Wesentlichen parallel zu der, von dem Verbindungsabschnitt des zumindest einen Aufnahmeelementes aufgespannten Ebene ausgerichtet sind.

Das Mittelteil des Verbinders umfasst durch seine im Wesentlichen U-förmige Ausgestaltung zumindest teilweise die erste Montageschiene, an welche eine weitere Montageschiene über die erfindungsgemässe Verbindungsvorrichtung abgeschlossen werden soll. Zur Positionierung des Verbinders kann dieser entlang der ersten Montageschiene verschoben und anschliessend mittels eines Befestigungsmittels in der gewünschten Position fixiert werden. Der Verbindungsabschnitt des Mittelteils weist z. B. eine oder mehrere Durchführöffnungen auf, in welche das Befestigungsmittel zur Fixierung des Verbinders an der ersten Montageschiene angeordnet werden kann oder vorgängig angeordnet wurde.

Die zweite Montageschiene wird vorzugsweise in das Aufnahmeelement von oben her eingelegt und ist in dieser Position provisorisch gehalten, so dass das Montagepersonal für die weiteren Arbeiten die Hände frei hat. In einer Variante dazu wird die anzuschliessende Montageschiene seitlich oder von unten her in das zumindest eine Aufnahmeelement eingelegt, wobei das zumindest eine Aufnahmeelement entsprechend ausgerichtet an einem der Schenkel des Mittelteils angeordnet ist. Anschliessend wird das Fixierelement in die Aufnahmen eingeführt, welche der Höhe der eingelegten Montageschiene entspricht. Beim Verspannen des Fixierelementes mit der zweiten Montageschiene verkantet sich das Fixierelement in den Aufnahmen, womit die zweite Montageschiene lösbar mit der erfindungsgemässen Verbindungsvorrichtung verspannt und an der ersten Montageschiene gehalten ist. Das Befestigungsmittel für das Fixierelement umfasst beispielsweise eine Schraube und eine als Hintergreifteil ausgebildete Mutter zum Hintergreifen der freien Ränder der Montageschiene oder eine so genannte Schienenmutter. Das Befestigungsmittel wird zur Fixierung der zweiten Montageschiene an der Verbindungsvorrichtung durch eine Durchführöffnung am Fixierelement hindurchgeführt oder ist vorgängig an dem Fixierelement vorgesehen.

Vorzugsweise weist der Verbinder zwei im Wesentlichen gleichartig ausgebildete Aufnahmeelemente an voneinander abgewandten Seiten der Schenkel des Mittelteils auf. Diese Ausgestaltung der erfindungsgemässen Verbindungsvorrichtung ermöglicht die Anordnung zweier, einander gegenüberliegender Montageschienen an einer ersten Montageschiene, beispielsweise zum Erstellen einer Rasterdecke. In die Aufnahmeelemente können beidseitig gleich hohe Montageschienen oder Montageschienen mit unterschiedlichen Höhen eingelegt werden.

Bevorzugt weist das Fixierelement einen Einsteckabschnitt, zum Einführen in die Aufnahmen des zumindest einen Aufnahmeelementes, und einen Anlageabschnitt auf, zur Anlage des Fixierelementes an der zu verbindenden Montageschiene, wobei der Einsteckabschnitt eine grössere Breite als die Breite des Anlageabschnitts aufweist. Die Breite des Anlageabschnitts entspricht maximal der lichten Breite zwischen den Schenkeln des Aufnahmeelementes beziehungsweise im Wesentlichen der Gesamtbreite der Montageschiene. Die Breite des Einsteckabschnitts ist derart gewählt, dass der Einsteckabschnitt seitlich über beide Seiten des Anlageabschnitts vorsteht, um in die Aufnahmen in den Schenkeln des Aufnahmeelementes eingreifen zu können.

Vorteilhafterweise sind an dem Einsteckabschnitt Prägungen vorgesehen, welche vorzugsweise schrägverlaufend ausgebildet sind. Die Prägungen sind im Wesentlichen in einem Abstand zueinander beabstandet, welcher dem mittleren Abstand der beiden Schenkel des Aufnahmeelementes zueinander entspricht, und verlaufen vom freien Rand des Einsteckabschnittes im Wesentlichen in Richtung des Anlageabschnitts. Die Prägungen dienen einerseits der Führung des Fixierelementes, welche mit den vom freien Rand des Einsteckabschnittes schrägverlaufenden Prägungen verbessert werden kann, und andererseits verhindern die Prägungen ein vorzeitiges Verklemmen beziehungsweise Verkanten des Fixierelementes beim Einführen desselben in die Aufnahmen des Aufnahmeelementes. Anstelle von Prägungen können Materialausnehmungen am Einsteckabschnitt vorgesehen sein.

Vorzugsweise ist der Einsteckabschnitt gegenüber einer Ebene, die durch den Anlageabschnitt gebildet ist, in einem Winkel α von 0° bis 40°, vorzugsweise in einem Winkel α von 10° bis 30°, abgewinkelt. Bei einer entsprechenden Ausbildung der Aufnahmen des zumindest einen Aufnahmeelementes kann der Einsteckabschnitt des Fixierelementes in der gleichen Ebene wie der Anlageabschnitt des Fixierelementes liegen. Nach dem Einführen des Einsteckabschnitts des Fixierelementes in die Aufnahmen des zumindest einen Aufnahmeelementes kann das Fixierelement durch Ablegen in Richtung der eingelegten Montageschiene mit der Oberseite dieser in Anlage gebracht werden, so dass der Anlageabschnitt des Fixierelementes an der Montageschiene anliegt und das Fixierelement mittels des Befestigungsmittels verspannt wird. Durch eine winklige Anordnung des Einsteckabschnitts bezüglich des Anlageabschnitts verkantet sich der Einsteckabschnitt mit den Aufnahmen in dem Aufnahmeelement und stellt eine ausreichende Fixierung der in das Aufnahmeelement eingelegten Montageschiene mit der Verbindungsvorrichtung sicher. Zudem können mit diesem Fixierelement Fertigungstoleranzen der Verbindungsvorrichtung sowie zwischen der Verbindungsvorrichtung und der eingelegten Montageschiene ausgeglichen werden.

Bevorzugt weist das Fixierelement an dem Anlageabschnitt, an dem gegenüberliegenden Ende vom Einsteckabschnitt einen Verspannabschnitt auf, wobei der Verspannabschnitt gegenüber einer Ebene, die durch den Anlageabschnitt gebildet ist, in einem Winkel β von 1 ° bis 10°, vorzugsweise in einem Winkel β von 2° bis 5°, abgewinkelt ist. Der Verspannabschnitt erzeugt eine zusätzliche Verspannkraft auf die Verbindung zwischen der Verbindungsvorrichtung und der eingelegten Montageschiene, was die Sicherheit dieser Verbindung zusätzlich erhöht. Die Durchführöffnung für das Befestigungsmittel zur Fixierung der eingelegten Montageschiene an der Verbindungsvorrichtung ist vorzugsweise im Verspannabschnitt ausgebildet. Zudem können mit diesem Fixierelement Fertigungstoleranzen der Verbindungsvorrichtung sowie zwischen der Verbindungsvorrichtung und der eingelegten Montageschiene ausgeglichen werden.

Vorteilhafterweise sind der Verspannabschnitt und der Einsteckabschnitt zur gleichen Seite der durch den Anlageabschnitt gebildeten Ebene abgewinkelt. Durch diese Ausgestaltung lassen sich in einfacher Weise hohe Verspannkräfte auf die Verbindung zwischen der Verbindungsvorrichtung und der eingelegten Montageschiene erzeugen.

Bevorzugt weist der Verbinder an dem Verbindungsabschnitt des Mittelteils eine Aufnahme für ein Abspannelement auf, wobei die Aufnahme vorzugsweise einen Gewindeabschnitt aufweist. Wird die erfindungsgemässe Verbindungsvorrichtung zum Erstellen von einer an der Tragkonstruktion eines Gebäudes abgehängten Zwischenebene verwendet, z. B. in Form einer Rasterdecke oder dergleichen, dient die Aufnahme der Anordnung eines der Abspannelemente dieser Abhängung. Der Gewindeabschnitt ist auf den Anschlussbereich am Abspannmittel abgestimmt. Weist dieser Anschlussbereich beispielsweise einen Gewindeabschnitt mit einem Aussengewinde auf, so ist der Gewindeabschnitt der Aufnahme als Innengewinde ausgebildet, welches mit dem Aussengewinde des Anschlussbereiches in Eingriff bringbar ist. Weist dieser Anschlussbereich dagegen einen Gewindeabschnitt mit einem Innenengewinde auf, so ist der Gewindeabschnitt der Aufnahme entsprechend als mit diesem Innengewinde in Eingriff bringbares Aussengewinde ausgebildet. In einer Variante dazu ist die Aufnahme am Verbinder mit einer Reibschlussvorrichtung versehen, in welche der Anschlussbereich des Abspannmittels einsteckbar ist.

Ein erfindungsgemässer Verbinder, insbesondere für eine erfindungsgemässe Verbindungsvorrichtung, beinhaltet ein Mittelteil, das zwei im Wesentlichen parallel zueinander ausgerichtete Schenkel und einen die beiden Schenkel verbindenden Verbindungsabschnitt aufweist, zum zumindest teilweisen Umgreifen einer ersten Montageschiene und zumindest einem, an einem Schenkel des Mittelteils angeordnetes Aufnahmeelement, das zwei im Wesentlichen parallel zueinander ausgerichtete Schenkel und einen die beiden Schenkel verbindenden Verbindungsabschnitt aufweist und in das eine zweite, mit der ersten Montageschiene auf Stoss zu befestigende Montageschiene einlegbar ist. An beiden Schenkeln des Aufnahmeelementes sind mehrere zueinander beabstandete, einander gegenüberliegende und schlitzartig ausgebildete Aufnahmen für ein Fixierelement zur Fixierung von in der Höhe unterschiedlich ausgebildeten und in das zumindest eine Aufnahmeelement eingelegte Montageschiene vorgesehen. Die Aufnahmen an den, dem Schenkel des Mittelteils abgewandten Rändern des Aufnahmeelementes sind offen ausgebildet und weisen in einem Abstand von diesen Rändern, zur Schaffung einer Verriegelungsnase, in der von dem Schenkel des Aufnahmeelementes aufgespannten Ebene, eine vorzugsweise dreieckige Erweiterung auf.

Die an den Schenkeln des zumindest einen Aufnahmeelementes angeordneten Aufnahmen sind in verschiedenen Abständen zum Verbindungsabschnitt des zumindest einen Aufnahmeelementes angeordnet, welche den Höhen der mit dem Verbinder zu verspannenden Montageschienen entsprechen. Das zumindest eine Aufnahmeelement weist im Querschnitt eine im Wesentlichen U-förmige Ausgestaltung auf. Ein Fixierelement kann in die einseitig offenen Aufnahmen des zumindest einen Aufnahmeelementes eingeschoben werden, welche der, in das zumindest eine Aufnahmeelement eingelegte Montageschiene am nächsten liegt. Die Öffnungen der Aufnahmen sind vorteilhafterweise im Wesentlichen parallel zu der, von dem Verbindungsabschnitt des zumindest einen Aufnahmeelementes aufgespannten Ebene ausgerichtet, wobei die vorzugsweise dreieckige Erweiterung der Aufnahmen in Richtung des Verbindungsabschnitts des zumindest einen Aufnahmeelementes ausgebildet sind. In einer Variante dazu sind die Schlitze schräg, von dem Rand des zumindest einen Aufnahmeelementes in Richtung der, von dem Verbindungsabschnitt des zumindest einen Aufnahmeelementes aufgespannten Ebene abfallend ausgerichtet, wobei die vorzugsweise dreieckige Erweiterung der Aufnahmen ebenfalls in Richtung des Verbindungsabschnitts des zumindest einen Aufnahmeelementes ausgebildet sind und einen geraden Abschnitt aufweisen, der im Wesentlichen parallel zu der, von dem Verbindungsabschnitt des zumindest einen Aufnahmeelementes aufgespannten Ebene ausgerichtet sind.

Das Mittelteil des Verbinders umfasst durch seine im Wesentlichen U-förmige Ausgestaltung zumindest teilweise die erste Montageschiene, an welche eine weitere Montageschiene über den erfindungsgemässen Verbinder abgeschlossen werden soll. Zur Positionierung des Verbinders kann dieser entlang der ersten Montageschiene verschoben und anschliessend mittels eines Befestigungsmittels in der gewünschten Position fixiert werden. Der Verbindungsabschnitt des Mittelteils weist z. B. eine oder mehrere Durchführöffnungen auf, in welche das Befestigungsmittel zur Fixierung des Verbinders an der ersten Montageschiene angeordnet werden kann oder vorgängig angeordnet wurde.

Die zweite Montageschiene wird vorzugsweise in das Aufnahmeelement von oben her eingelegt und ist in dieser Position provisorisch gehalten, so dass das Montagepersonal für die weiteren Arbeiten die Hände frei hat. In einer Variante dazu wird die anzuschliessende Montageschiene seitlich oder von unten her in das zumindest eine Aufnahmeelement eingelegt, wobei das zumindest eine Aufnahmeelement entsprechend ausgerichtet an einem der Schenkel des Mittelteils angeordnet ist.

Vorzugsweise sind zwei im Wesentlichen gleichartig ausgebildete Aufnahmeelemente an voneinander abgewandten Seiten der Schenkel des Mittelteils vorgesehen. Diese Ausgestaltung des erfindungsgemässen Verbinders ermöglicht die Anordnung zweier, einander gegenüberliegender Montageschienen an einer ersten Montageschiene, beispielsweise zum Erstellen einer Rasterdecke. In die Aufnahmeelemente können beidseitig gleich hohe Montageschienen oder Montageschienen mit unterschiedlichen Höhen eingelegt werden.

Bevorzugt ist an dem Verbindungsabschnitt des Mittelteils eine Aufnahme für ein Abspannelement vorgesehen, welche vorzugsweise mit einem Gewindeabschnitt versehen ist. Wird der erfindungsgemässe Verbinder zum Erstellen von einer an der Tragkonstruktion eines Gebäudes abgehängten Zwischenebene verwendet, z. B. in Form einer Rasterdecke oder dergleichen, dient die Aufnahme der Anordnung eines der Abspannelemente dieser Abhängung. Der Gewindeabschnitt ist auf den Anschlussbereich am Abspannmittel abgestimmt. Weist dieser Anschlussbereich beispielsweise einen Gewindeabschnitt mit einem Aussengewinde auf, so ist der Gewindeabschnitt der Aufnahme als Innengewinde ausgebildet, welches mit dem Aussengewinde des Anschlussbereiches in Eingriff bringbar ist. Weist dieser Anschlussbereich dagegen einen Gewindeabschnitt mit einem Innenengewinde auf, so ist der Gewindeabschnitt der Aufnahme entsprechend als mit diesem Innengewinde in Eingriff bringbares Aussengewinde ausgebildet. In einer Variante dazu ist die Aufnahme am Verbinder mit einer Reibschlussvorrichtung versehen, in welche der Anschlussbereich des Abspannmittels einsteckbar ist.

Vorteilhafterweise ist das Mittelteil mit dem zumindest einen Aufnahmeelement vernietet. Der erfindungsgemässe Verbinder und seine Teile sind vorzugsweise aus Metall gefertigt. Auch das Fixierelement für die erfindungsgemässe Verbindungsvorrichtung ist vorteilhafterweise aus Metall hergestellt. Die einzelnen Teile werden beispielsweise in einem Stanz/Biegeverfahren gefertigt. Bei einer Verwendung des Verbinders oder der Verbindungsvorrichtung beispielsweise in chemisch aggressiver Umgebung werden die einzelnen Teile vorzugsweise aus einem korrossionsbeständigem Material gefertigt. Anstelle eines Verbinders, dessen Mittelteil mit dem zumindest einen Auflageelement vernietet ist, kann das zumindest eine Auflageelement mit dem Mittelteil verlötet oder verschweisst sein. Des Weiteren kann der gesamte Verbinder aus einem Materialstück als Stanz-/Biegeteil gefertigt sein. Alternativ dazu können der Verbinder und die gesamte Verbindungsvorrichtung aus einem geeigneten Kunststoff gefertigt sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: Die erfindungsgemässe Verbindungsvorrichtung in einem Grundriss;
- Fig. 2: die erfindungsgemässe Verbindungsvorrichtung in einem Schnitt gemäss II-II in Fig. 1;
- Fig. 3: die erfindungsgemässe Verbindungsvorrichtung in einem Schnitt gemäss III-III in Fig. 1;
- Fig. 4: eine Seitenansicht eines Fixierelementes;
- Fig. 5: das in Fig. 4 gezeigte Fixierelement im Grundriss;
- Fig. 6a-d: die Montage des in Fig. 4 gezeigten Fixierelementes in vier Montagezuständen;
- Fig. 7: eine Variante des in Fig. 4 gezeigten Fixierelementes in einer Seitenansicht;
- Fig. 8: eine weitere Variante des in Fig. 4 gezeigten Fixierelementes in einer Seitenansicht; und
- Fig. 9: eine Seitenansicht einer Variante eines Verbinders für die Anordnung des in Fig. 8 gezeigten Fixierelementes.

Grundsätzlich sind in den Figuren gleiche Teile mit den gleichen Bezugszeichen versehen.

### Wege zur Ausführung der Erfindung

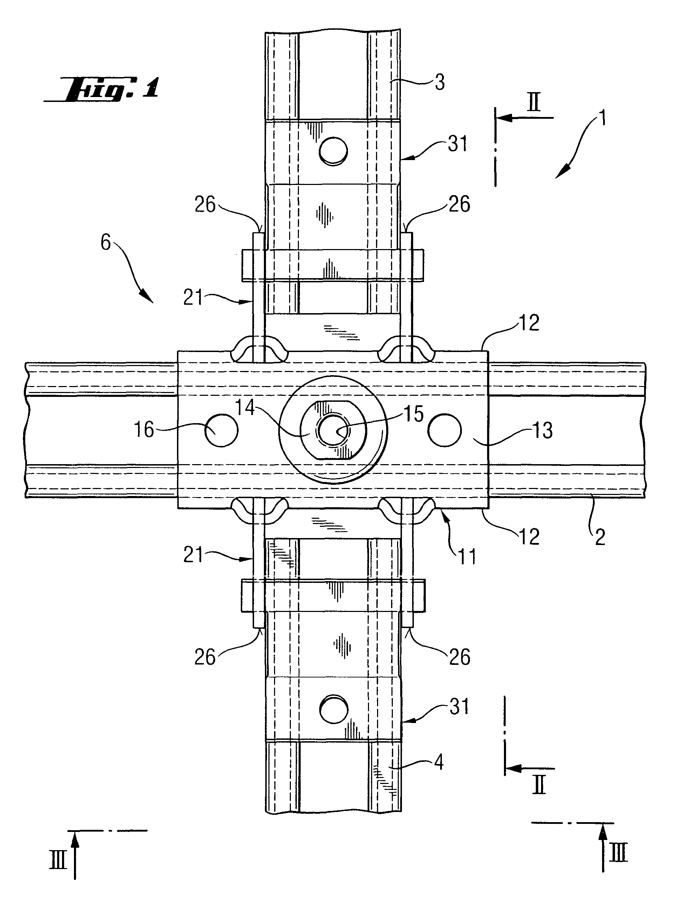

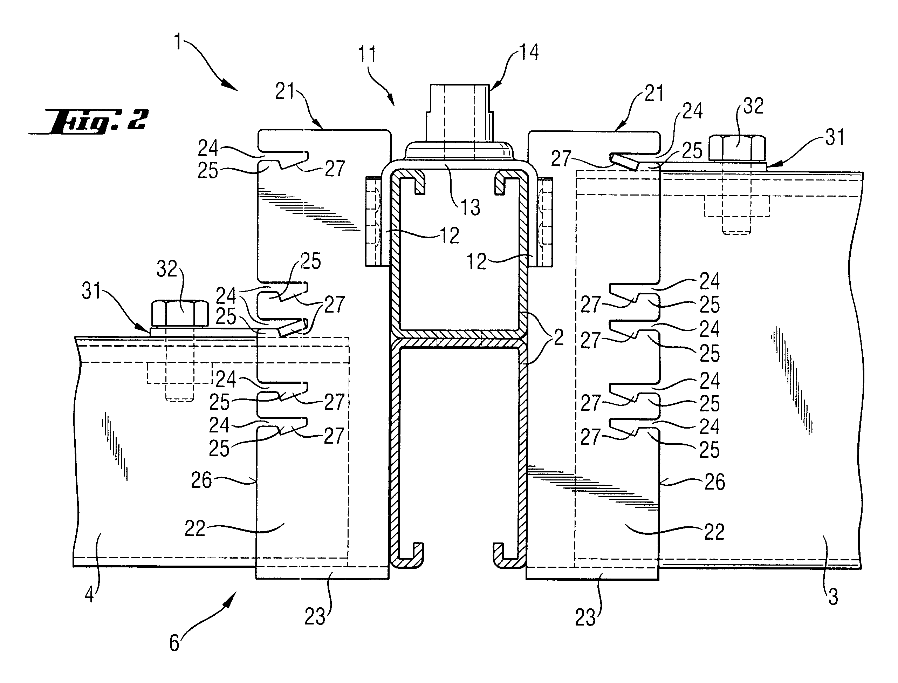

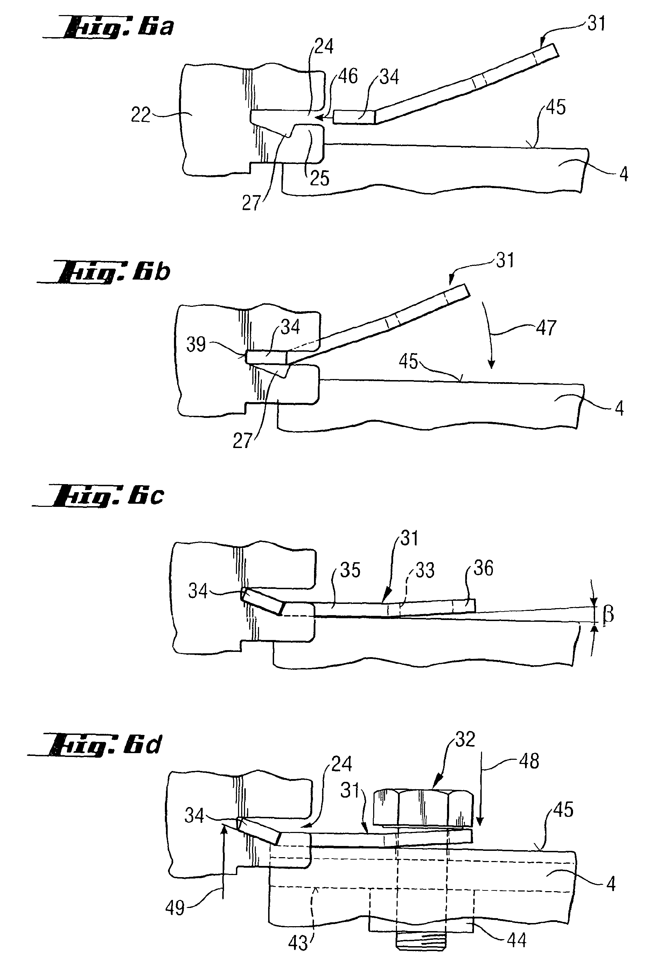

Die in den Figuren 1 bis 3 gezeigte Verbindungsvorrichtung 1 zum Verbinden zweier Montageschienen 3 und 4 an der Montageschiene 2 umfasst einen Verbinder 6 mit einem Mittelteil 11 und zwei Aufnahmeelementen 21 sowie zwei, in die Aufnahmeelemente 21 des Verbinders 6 einführbare Fixierelemente 31. Das Mittelteil 11 ist mit den Aufnahmeelementen 21 vernietet.

Das Mittelteil 11 des Verbinders 6 ist im Querschnitt U-förmig ausgebildet und weist zwei im Wesentlichen parallel zueinander ausgerichtete Schenkel 12 sowie einen, die beiden Schenkel 12 verbindenden Verbindungsabschnitt 13 auf. An dem Verbindungsabschnitt 13 ist eine Aufnahme 14 für ein Abspannmittel vorgesehen. Die Aufnahme 14 weist als Gewindeabschnitt 15 ein Innengewinde auf für den Anschluss der Verbindungsvorrichtung 1 an einem Abspannmittel, welches einen Anschlussbereich mit einem in das Innengewinde in der Aufnahme 14 in Eingriff bringbares Aussengewinde aufweist. An dem Verbindungsabschnitt 13 des Mittelteils 11 sind zwei Durchführöffnungen 16 zur Durchführung zweier Befestigungsmittel, wie beispielsweise Schienenmuttern oder Schrauben mit einer, in die Montageschiene 2 einführbaren und verriegelbaren Hintergreifmutter, vorgesehen.

Die beiden Aufnahmeelemente 21 des Verbinders 6 sind im Querschnitt U-förmig und gleichartig ausgebildet. Jedes Aufnahmeelement 21 weist zwei im Wesentlichen parallel zueinander ausgerichtete Schenkel 22 sowie einen, die beiden Schenkel 22 verbindenden Verbindungsabschnitt 23 auf. An beiden Schenkeln 22 sind mehrere zueinander beabstandete, einander gegenüberliegende und schlitzartig ausgebildete Aufnahmen 24 für das Fixierelement 31 zur Fixierung von in der Höhe unterschiedlich ausgebildeten und in die Aufnahmeelemente 21 eingelegten Montageschienen 3, bzw. 4 vorgesehen. Die Abstände der Aufnahmen 24 untereinander und von dem Verbindungsabschnitt 23 des Aufnahmeelementes 21 in Richtung der Längserstreckung der Schenkel 22 sind variabel und von den Typen von Montageschienen 3 und 4 abhängig, welche für ein Einlegen in die Aufnahmeelemente 21 vorgesehen sind. Die Aufnahmen 24 sind an den Rändern 26 des Aufnahmeelementes 21 offen ausgebildet. Zur Schaffung einer Verriegelungsnase 25 in der Aufnahme 24 sind in einem Abstand von den Rändern 26 in jeder Aufnahme 24 Erweiterungen 27 vorgesehen, welche sich von der schlitzartigen Ausgestaltung der Aufnahmen 24 in Richtung des Verbindungsabschnittes 23 des Aufnahmeelementes 21 in der Ebene der Schenkel 22 erstrecken.

Mittels des Befestigungsmittel 32 (z. B. einer Schienenmutter), welches durch die Durchführöffnung 33 in dem Fixierelement 31 hindurchgeführt ist, werden die, in die Aufnahmeelemente 21 eingelegten Montageschienen 3 und 4 mit der Verbindungsvorrichtung 1 verspannt.

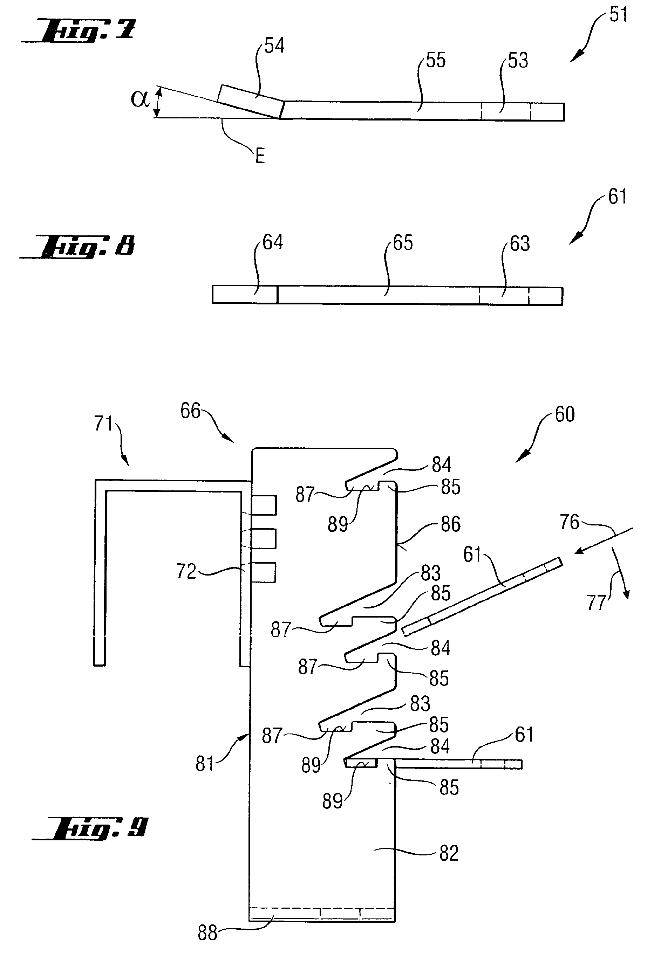

In den Figuren 4 und 5 ist das Fixierelement 31 im Detail dargestellt. Das Fixierelement 31 weist einen Einsteckabschnitt 34, einen Anlageabschnitt 35 und einen Verspannabschnitt 36 auf, wobei die Durchführöffnung 33 für das Befestigungsmittel 32 im Verspannabschnitt 36 angeordnet ist. Der Einsteckabschnitt 34 weist eine grössere Breite B als die Breite A des Anlageabschnitts 35 auf, wobei der Einsteckabschnitt 34 unter Bildung zweier Einführlaschen 37 über die Seitenränder 38 des Anlageabschnitts 35 jeweils übersteht. Die Breite B des Einsteckabschnitts 34 ist für einen ausreichenden Eingriff in die Aufnahmen 24 in den Schenkeln 22 grösser als die mittlere Breite M des Aufnahmeelementes 21 ausgebildet. Die Breite A des Anlageabschnitts 35 entspricht maximal der lichten Breite L zwischen den Schenkeln 22 des Aufnahmeelementes 21 und etwa der Breite der mit dem Fixierelement 31 zu fixierenden Montageschiene 3, bzw. 4. Am freien Rand 39 des Einsteckabschnitts 34 sind in Richtung des Anlageabschnitts 35 schrägverlaufende Prägungen 40 in einem Abstand P zueinander angeordnet, welcher etwa der mittleren Breite M des Aufnahmeelementes 21 entspricht.

Der Einsteckabschnitt 34 ist in einem Winkel α von 20°zu der Ebene E abgewinkelt, welche durch den Anlageabschnitt 35 gebildet wird. Der Verspannabschnitt 36 ist in einem Winkel β von 4° zu der Ebene E abgewinkelt, welche durch den Anlageabschnitt 35 gebildet wird. Der Einsteckabschnitt 34 und der Verspannabschnitt 36 sind beide zur gleichen Seite der, durch den Anlageabschnitt gebildeten Ebene E abgewinkelt.

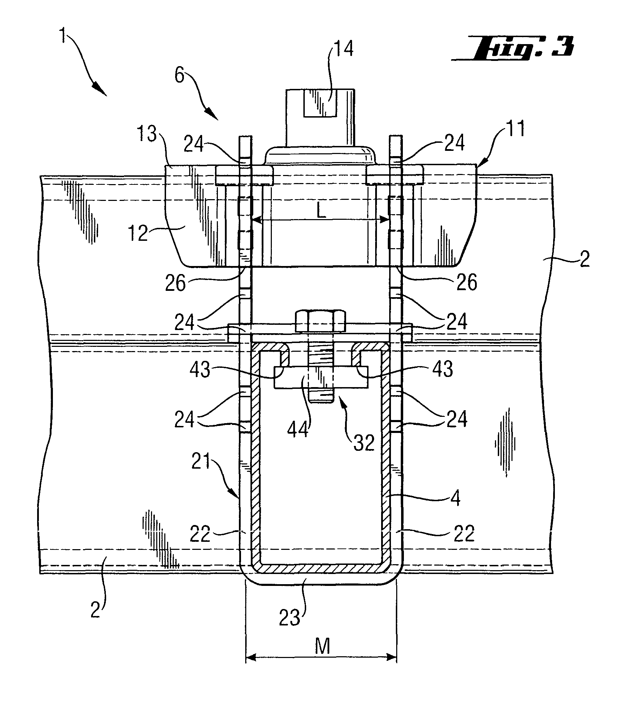

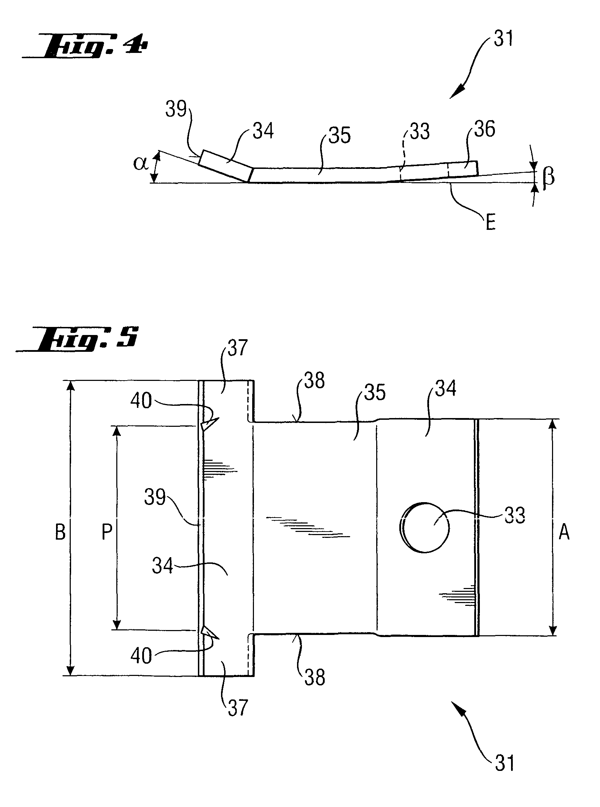

In den Figuren 6a bis 6d ist jeweils ein Detailausschnitt einer in Fig. 2 gezeigten Aufnahme 24 in vier Montagezuständen als Beispiel einer Montage des Fixierelementes 31 dargestellt. Nach dem Einlegen der Montageschiene 4 in das Aufnahmeelement 21 wird der Einsteckabschnitt des Fixierelementes 31 in Richtung des Pfeils 46 in die Aufnahme 24 eingeschoben, welche der Oberseite 45 der eingelegten Montageschiene 4 am nächsten liegt. Sobald der freie Rand 39 des Einsteckabschnitts 34 in der Aufnahme 24 ansteht, wird das Fixierelement 31 in Richtung der zu fixierenden Montageschiene 4 (Pfeil 47) verschwenkt, bis der Anlageabschnitt 35 an der Oberseite 45 der Montageschiene 4 anliegt. Dabei kommt der Einsteckabschnitt 34 in die Erweiterung 27 der Aufnahme 24 zu liegen. Der zu dem Anlageabschnitt 35 abgewinkelte Verspannabschnitt 36 steht im Winkel β von der Oberseite 45 der Montageschiene 4 ab. Durch die Durchführöffnung 33 im Verspannabschnitt 36 wird das Befestigungsmittel 32 hindurchgeführt und verdreht, so dass dessen Hintergreifteil 44 die freien Ränder 43 der Montageschiene 4 hintergreift. Beim Verspannen des Befestigungsmittels 32 wird der Verspannabschnitt 36 in Richtung (Pfeil 48) der Oberseite 45 der Montageschiene 4 gedrückt, wobei der Einsteckabschnitt 34 in Gegenrichtung (Pfeil 49) zur Richtung des Pfeils 48 angehoben wird. Dabei verklemmt der Einsteckabschnitt 34 und somit das ganze Fixierelement 31 in der Aufnahme 24 zu einer sicheren und wieder lösbaren Verbindung.

Das in Fig. 7 gezeigte Ausführungsbeispiel eines Fixierelementes 51 weist nur einen Anlageabschnitt 55 und einen Einsteckabschnitt 54 auf, der in einem Winkel α von 15° zu der Ebene E abgewinkelt ist, welche durch den Anlageabschnitt 55 gebildet wird. Die Durchführöffnung 53 für ein Befestigungsmittel ist im Anlageabschnitt 55 angeordnet.

Die in Fig. 8 dargestellte Variante eines Fixierelementes 61 weist ebenfalls nur einen Anlageabschnitt 65 und einen Einsteckabschnitt 64 auf, der in der gleichen Ebene wie der Anlageabschnitt 65 liegt. Die Durchführöffnung 63 für ein Befestigungsmittel ist im Anlageabschnitt 65 angeordnet.

Fig. 9 zeigt eine Variante eines Verbinders 66 für die Anordnung von Fixierelementen 61 gemäss Fig. 8 mit einem Mittelteil 71 und nur einem Aufnahmeelement 81, welches an einem der Schenkel 72 angeordnet ist. Das Aufnahmeelement 81 ist im Querschnitt U-förmig ausgebildet. An den Schenkeln 82 sind mehrere zueinander beabstandete, einander gegenüberliegende und schlitzartig ausgebildete Aufnahmen 83 und 84 vorgesehen, wobei die Aufnahmen 83 einen grösseren Abstand vom Rand 86 als die Aufnahmen 84 aufweisen. Die Abstände der Aufnahmen 83 und 84 untereinander und von dem Verbindungsabschnitt 88 des Aufnahmeelementes 81 in der Richtung der Längserstreckung der Schenkel 82 sind variabel und von den Typen von Montageschienen abhängig, welche für ein Einlegen in das Aufnahmeelement 81 vorgesehen sind. Die Aufnahmen 83 und 84 sind an den Rändern 86 des Aufnahmeelementes 81 offen ausgebildet und verlaufen in Richtung des Mittelteils 71 leicht geneigt in einem Winkel y, in diesem Beispiel, von 25°. Zur Schaffung einer Verriegelungsnase 85 in den Aufnahmen 83 und 84 sind in einem Abstand von den Rändern 86 in jeder Aufnahme 83 und 84, in der Ebene der Schenkel 82 dreieckig ausgebildete, Erweiterungen 87 vorgesehen, welche sich von der schlitzartigen Ausgestaltung der Aufnahmen 83 und 84 in Richtung des Verbindungsabschnittes 88 des Aufnahmeelementes 81 in der Ebene der Schenkel 82 erstrecken. Die, dem Verbindungsabschnitt 88 des Aufnahmeelementes 81 zugewandeten Ränder 89 der Erweiterungen 87 verlaufen im Wesentlichen parallel zu der, von dem Verbindungsabschnitt 88 aufgespannten Ebene.

Das Fixierelement 61 wird in Richtung des Pfeils 76, in Abhängigkeit der Höhenerstreckung der zu fixierenden und in das Aufnahmeelement 81 eingelegten Montageschiene, in die Aufnahme 84 beziehungsweise in die Aufnahme 83 mit dem Einsteckabschnitt 64 eingeführt. Sobald der Einsteckabschnitt 64 an der Aufnahme 84, bzw. 83 ansteht, wird das Fixierelement 61 in Richtung des Pfeils 77 abgedreht, so dass das Fixierelement 61 auf eine eingelegte Montageschiene zu liegen kommt und diese mittels eines Befestigungsmittels mit der Verbindungsvorrichtung 60 verspannt werden kann.

## Patentansprüche

1. Verbindungsvorrichtung zum Verbinden von Montageschienen (2, 3, 4) im Kreuzstoss mit einem Verbinder (6; 66), der ein Mittelteil (11; 71), das zwei im Wesentlichen parallel zueinander ausgerichtete Schenkel (12; 72) und einen die beiden Schenkel (12; 72) verbindenden Verbindungsabschnitt (13) aufweist, zum zumindest teilweisen Umgreifen einer ersten Montageschiene (2) und der zumindest ein, an einem Schenkel (12; 72) des Mittelteils (11; 71) angeordnetes Aufnahmeelement (21; 81) beinhaltet, das zwei im Wesentlichen parallel zueinander ausgerichtete Schenkel (22; 82) und einen die beiden Schenkel (22; 82) verbindenden Verbindungsabschnitt (23; 88) aufweist und in das eine zweite, mit der ersten Montageschiene (2) auf Stoss zu befestigende Montageschiene (3, 4) einlegbar ist, sowie mit einem Fixierelement (31; 51; 61), das an den Schenkeln (22; 82) des Aufnahmeelementes (21; 81) festlegbar ist und mittels eines Befestigungsmittels (32) die zweite Montageschiene (3, 4) mit der Verbindungsvorrichtung (1; 60) verspannt, **dadurch gekennzeichnet, dass** an beiden Schenkeln (22; 82) des Aufnahmeelementes (21; 81) mehrere zueinander beabstandete, einander gegenüberliegende und schlitzartig ausgebildete Aufnahmen (24; 83, 84) für das Fixierelement (31; 51; 61) zur Fixierung von in der Höhe unterschiedlich ausgebildeten und in das zumindest eine Aufnahmeelement (21; 81) eingelegten Montageschienen (3, 4) vorgesehen sind, wobei die Aufnahmen (24; 83, 84) an den, dem Schenkel (12; 72) des Mittelteils (11; 71) abgewandten Rändern (26; 86) des Aufnahmeelementes (21; 81) offen ausgebildet sind und in einem Abstand von diesen Rändern (26; 86), zur Schaffung einer Verriegelungsnase (25; 85), in der von dem Schenkel (22; 82) des Aufnahmeelementes (21; 81) aufgespannten Ebene, eine vorzugsweise dreieckige Erweiterung (27; 87) aufweisen.

2. Verbindungsvorrichtung nach Anspruch 1, **dadurch gekennzeichnet, dass** der Verbinder (6) zwei im Wesentlichen gleichartig ausgebildete Aufnahmeelemente (21) an voneinander abgewandten Seiten der Schenkel (12) des Mittelteils (11) aufweist.

3. Verbindungsvorrichtung nach Anspruch 1 oder 2, **dadurch gekennzeichnet, dass** das Fixierelement (31; 51; 61) einen Einsteckabschnitt (34; 54; 64), zum Einführen in die Aufnahmen (24; 83, 84) des zumindest einen Aufnahmeelementes (21; 81), und einen Anlageabschnitt (35; 55; 65) aufweist, zur Anlage des Fixierelementes (31; 51; 61) an der zu verbindenden Montageschiene (3, 4), wobei der Einsteckabschnitt (34; 54; 64) eine grössere Breite (B) als die Breite (A) des Anlageabschnitts (35; 55; 65) aufweist.

4. Verbindungsvorrichtung nach Anspruch 3, **dadurch gekennzeichnet, dass** an dem Einsteckabschnitt (34) vorzugsweise schrägverlaufende Prägungen (40) vorgesehen sind.

5. Verbindungsvorrichtung nach Anspruch 3 oder 4, **dadurch gekennzeichnet, dass** der Einsteckabschnitt (34; 54; 64) gegenüber einer Ebene (E), die durch den Anlageabschnitt (35; 55; 65) gebildet ist, in einem Winkel α von 0°bis 40°, vorzugsweise in einem Winkel α von 10° bis 30 °, abgewinkelt ist.

6. Verbindungsvorrichtung nach einem der Ansprüche 3 bis 5, **dadurch gekennzeichnet, dass** das Fixierelement (31) an dem Anlageabschnitt (36), an dem gegenüberliegenden Ende vom Einsteckabschnitt (34) einen Verspannabschnitt (36) aufweist, wobei der Verspannabschnitt (36) gegenüber einer Ebene (E), die durch den Anlageabschnitt (36) gebildet ist, in einem Winkel β von 1 ° bis 10°, vorzugsweise in einem Winkel β von 2° bis 5°, abgewinkelt ist.

7. Verbindungsvorrichtung nach Anspruch 6, **dadurch gekennzeichnet, dass** der Verspannabschnitt (36) und der Einsteckabschnitt (34) zur gleichen Seite der, durch den Anlageabschnitt (35) gebildeten Ebene (E) abgewinkelt sind.

8. Verbindungsvorrichtung nach einem der Ansprüche 1 bis 7, **dadurch gekennzeichnet, dass** der Verbinder (6) an dem Verbindungsabschnitt (13) des Mittelteils (11) eine Aufnahme für ein Abspannelement, vorzugsweise eine mit einem Gewindeabschnitt (15) versehene Aufnahme (14), aufweist.

9. Verbinder, insbesondere für eine Verbindungsvorrichtung nach einem der Ansprüche 1 bis 8, mit einem Mittelteil (11; 71), das zwei im Wesentlichen parallel zueinander ausgerichtete Schenkel (12; 72) und einen die beiden Schenkel (12; 72) verbindenden Verbindungsabschnitt (13) aufweist, zum zumindest teilweisen Umgreifen einer ersten Montageschiene (2) und mit zumindest einem, an einem Schenkel (12; 72) des Mittelteils (11; 71) angeordnetes Aufnahmeelement (21; 81), das zwei im Wesentlichen parallel zueinander ausgerichtete Schenkel (22; 82) und einen die beiden Schenkel (22; 82) verbindenden Verbindungsabschnitt (23; 88) aufweist und in das eine zweite, mit der ersten Montageschiene (2) auf Stoss zu befestigende Montageschiene (3, 4) einlegbar ist, **dadurch gekennzeichnet, dass** an beiden Schenkeln (22; 82) des Aufnahmeelementes (21; 81) mehrere zueinander beabstandete, einander gegenüberliegende und schlitzartig ausgebildete Aufnahmen (24; 83, 84) für ein Fixierelement (31; 51; 61) zur Fixierung von in der Höhe unterschiedlich ausgebildeten und in das zumindest eine Aufnahmeelement (21; 81) eingelegte Montageschiene (3, 4) vorgesehen sind, wobei die Aufnahmen (24; 83, 84) an den, dem Schenkel (12; 72) des Mittelteils (11; 71) abgewandten Rändern (26; 86) des Aufnahmeelementes (21; 81) offen ausgebildet sind und in einem Abstand von diesen Rändern (26; 86), zur Schaffung einer Verriegelungsnase (25; 85), in der von dem Schenkel (22; 82) des Aufnahmeelementes (21; 81) aufgespannten Ebene, eine vorzugsweise dreieckige Erweiterung (27; 87) aufweisen.

10. Verbinder nach Anspruch 9, **dadurch gekennzeichnet, dass** zwei im Wesentlichen gleichartig ausgebildete Aufnahmeelemente (21) an voneinander abgewandten Seiten der Schenkel (12) des Mittelteils (11) vorgesehen sind.

11. Verbinder nach Anspruch 9 oder 10, **dadurch gekennzeichnet, dass** an dem Verbindungsabschnitt (13) des Mittelteils (11) eine Aufnahme für ein Abspannelement, vorzugsweise eine mit einem Gewindeabschnitt (15) versehene Aufnahme (14), vorgesehen ist.

12. Verbinder nach einem der Ansprüche 9 bis 11, **dadurch gekennzeichnet, dass** das Mittelteil (11; 71) mit dem zumindest einen Aufnahmeelement (21; 81) vernietet ist.

## Claims

1. A connecting device for connecting mounting rails (2, 3, 4) butted together in the form of a cross, said connecting device including a connector (6; 66) comprising a central portion (11; 71) with two legs (12; 72) oriented substantially parallel to one another and a connecting portion (13) linking said two legs (12; 72) for surrounding, at least in part, a first mounting rail (2), said connector (6; 66) including at least one receiving element (21; 81), which is disposed on one leg (12; 72) of the central portion (11; 71) and which has two legs (22; 82) oriented substantially parallel to one another and a connecting portion (23; 88) linking said two legs (22; 82), into which receiving element (21; 81) a second mounting rail (3, 4) to be butt joined to the first mounting rail (2) can be inserted, and said connecting device also including a fixing element (31; 51; 61), which can be fixed to the legs (22; 82) of the receiving element (21; 81) and which braces the second mounting rail (3, 4) with the connecting device (1; 60) via fastening means (32), **characterized in that**, on both legs (22; 82) of the receiving element (21; 81), a plurality of recesses (24; 83, 84) are provided which are spaced apart from one another, lie opposite one another and are formed in the manner of slots for receiving the fixing element (31; 51; 61) for fixing mounting rails (3, 4) of different heights which are inserted into the at least one receiving element (21; 81), said recesses (24; 83, 84) being formed so as to be open at the edges (26; 86) of the receiving element (21; 81) which face away from the leg (12; 72) of the central portion (11; 71), and, at a distance from these edges (26; 86), being formed with a preferably triangular extension (27; 87) so as to form an interlocking lug (25; 85) in the plane clamped by the leg (22; 82) of the receiving element (21; 81).

2. A connecting device according to Claim 1, **characterized in that** the connector (6) has two substantially similarly formed receiving elements (21) on the sides facing away from one another of the legs (12) of the central portion (11).

3. A connecting device according to Claim 1 or 2, **characterized in that** the fixing element (31; 51; 61) comprises a push-in portion (34; 54; 64) for insertion into the recesses (24; 83, 84) of the at least one receiving element (21; 81), and a bearing portion (35; 55; 65) for positioning of the fixing element (31; 51; 61) on the mounting rail (3, 4) to be connected, the push-in portion (34; 54; 64) having a greater width (B) than the width (A) of the bearing portion (35; 55; 65).

4. A connecting device according to Claim 3, **characterized in that** embossments (40), preferably extending diagonally, are provided on the push-in portion (34).

5. A connecting device according to Claim 3 or 4, **characterized in that** the push-in portion (34; 54; 64) is bent at an angle α of 0° to 40°, and preferably at an angle α of 10° to 30°, relative to a plane (E) formed by the bearing portion (35; 55; 65).

6. A connecting device according to one of Claims 3 to 5, **characterized in that**, on the bearing portion (36) at the opposite end to the push-in portion (34), the fixing element (31) has a bracing portion (36), the bracing portion (36) being bent at an angle β of 1° to 10°, and preferably at an angle β of 2° to 5°, relative to a plane (E) formed by the bearing portion (36).

7. A connecting device according to Claim 6, **characterized in that** the bracing portion (36) and the push-in portion (34) are angled towards the same side of the plane (E) formed by the bearing portion (35).

8. A connecting device according to one of Claims 1 to 7, **characterized in that**, on the connecting portion (13) of the central portion (11), the connector (6) has a holder for an anchoring element, preferably a holder (14) provided with a threaded portion (15).

9. A connector, in particular for a connecting device according to one of Claims 1 to 8, having a central portion (11; 71), comprising two legs (12; 72) oriented substantially parallel to one another and a connecting portion (13) linking said two legs (12; 72), for surrounding, at least in part, a first mounting rail (2), said connector including at least one receiving element (21; 81), which is disposed on one leg (12; 72) of the central portion (11; 71) and which has two legs (22; 82) oriented substantially parallel to one another and a connecting portion (23; 88) linking said two legs (22; 82), into which receiving element (21; 81) a second mounting rail (3, 4) to be butt joined to the first mounting rail (2) can be inserted, **characterized in that**, on both legs (22; 82) of the receiving element (21; 81), a plurality of recesses (24; 83, 84) are provided which are spaced apart from one another, lie opposite one another and are formed in the manner of slots for receiving a fixing element (31; 51; 61) for fixing mounting rails (3, 4) of different heights which are inserted into the at least one receiving element (21; 81), said recesses (24; 83, 84) being formed so as to be open at the edges (26; 86) of the receiving element (21; 81) which face away from the leg (12; 72) of the central portion (11; 71), and, at a distance from these edges (26; 86), being formed with a preferably triangular extension (27; 87) so as to form an interlocking lug (25; 85) in the plane clamped by the leg (22; 82) of the receiving element (21; 81).

10. A connector according to Claim 9, **characterized in that** two substantially similarly formed receiving elements (21) are provided on the sides facing away from one another of the legs (12) of the central portion (11).

11. A connector according to Claim 9 or 10, **characterized in that**, on the connecting portion (13) of the central portion (11), a holder is provided for an anchoring element, preferably a holder (14) provided with a threaded portion (15).

12. A connector according to one of Claims 9 to 11, **characterized in that** the central portion (11; 71) is riveted together with the at least one receiving element (21; 81).

## Revendications

1. Dispositif de liaison pour relier des rails de montage (2, 3, 4) en croix, avec un raccord (6 ; 66) comprenant une partie centrale (11 ; 71) qui comporte deux branches (12 ; 72) orientées sensiblement parallèlement l'une à l'autre et une portion de liaison (13) reliant les deux branches (12 ; 72) pour enserrer au moins partiellement un premier rail de montage (2) et comprenant au moins un élément récepteur (21 ; 81) qui est disposé sur une branche (12, 72) de la partie centrale (11 ; 71) et comporte deux branches (22 ; 82) orientées sensiblement parallèlement l'une à l'autre et une portion de liaison (23 ; 88) reliant les deux branches (22 ; 82) et dans lequel un second rail de montage (3, 4) à fixer en bout au premier rail de montage (2) peut être inséré, et avec un élément de blocage (31 ; 51 ; 61) qui peut être assujetti aux branches (22 ; 82) de l'élément récepteur (21 ; 81) et qui, à l'aide d'un moyen de fixation (32), solidarise le second rail de montage (3, 4) au dispositif de liaison (1 ; 60), **caractérisé en ce que** sur les deux branches (22 ; 82) de l'élément récepteur (21 ; 81) sont prévus, pour l'élément de blocage (31 ; 51 ; 61), plusieurs logements distants les uns des autres, en vis-à-vis et en forme de fentes (24 ; 83, 84) servant au blocage de rails de montage (3, 4) conformés différemment en hauteur et insérés dans l'élément récepteur au nombre d'au moins un (21 ; 81), les logements (24 ; 83, 84) étant ouverts sur les bords (26 ; 86) de l'élément récepteur (21 ; 81) orientés à l'opposé de la branche (12 ; 72) de la partie centrale (11 ; 71) et comportant, à distance de ces bords (26 ; 86), dans le plan défini par la branche (22 ; 82) de l'élément récepteur (21 ; 81), une partie élargie de préférence triangulaire (27 ; 87) pour créer un nez de verrouillage (25 ; 85).

2. Dispositif de liaison selon la revendication 1, **caractérisé en ce que** le raccord (6) comporte deux éléments récepteurs (21) de conformation sensiblement identique sur des côtés mutuellement opposés des branches (12) de la partie centrale (11).

3. Dispositif de liaison selon la revendication 1 ou 2, **caractérisé en ce que** l'élément de blocage (31 ; 51 ; 61) comporte une portion d'insertion (34 ; 54 ; 64) à introduire dans les logements (24 ; 83, 84) de l'élément récepteur au nombre d'au moins un (21 ; 81) et une portion d'appui (35 ; 55 ; 65) pour appuyer l'élément de blocage (31 ; 51 ; 61) contre le rail de montage à relier (3, 4), la portion d'insertion (34 ; 54 ; 64) possédant une largeur (B) supérieure à la largeur (A) de la portion d'appui (35 ; 55 ; 65).

4. Dispositif de liaison selon la revendication 3, **caractérisé en ce que** des empreintes (40), de préférence en biais, sont prévues dans la portion d'insertion (34).

5. Dispositif de liaison selon la revendication 3 ou 4, **caractérisé en ce que** la portion d'insertion (34 ; 54 ; 64) est coudée selon un angle α de 0° à 40°, de préférence selon un angle α de 10° à 30°, par rapport à un plan (E) formé par la portion d'appui (35 ; 55 ; 65).

6. Dispositif de liaison selon une des revendications 3 à 5, **caractérisé en ce que**, sur la portion d'appui (36), à l'extrémité opposée à la portion d'insertion (34), l'élément de blocage (31) comporte une portion de serrage (36), la portion de serrage (36) étant coudée selon un angle P de 1° à 10°, de préférence selon un angle β de 2° à 5°, par rapport à un plan (E) formé par la portion d'appui (36).

7. Dispositif de liaison selon la revendication 6, **caractérisé en ce que** la portion de serrage (36) et la portion d'insertion (34) sont coudées vers le même côté du plan (E) formé par la portion d'appui (35).

8. Dispositif de liaison selon une des revendications 1 à 7, **caractérisé en ce que** le raccord (6) comporte, au niveau de la portion de liaison (13) de la partie centrale (11), un logement pour un élément d'accrochage, de préférence un logement (14) pourvu d'une portion filetée (15).

9. Raccord, en particulier pour un dispositif de liaison selon une des revendications 1 à 8, comprenant une partie centrale (11 ; 71) qui comporte deux branches (12 ; 72) orientées sensiblement parallèlement l'une à l'autre et une portion de liaison (13) reliant les deux branches (12 ; 72) pour enserrer au moins partiellement un premier rail de montage (2) et comprenant au moins un élément récepteur (21 ; 81) qui est disposé sur une branche (12, 72) de la partie centrale (11 ; 71) et comporte deux branches (22 ; 82) orientées sensiblement parallèlement l'une à l'autre et une portion de liaison (23 ; 88) reliant les deux branches (22 ; 82) et dans lequel un second rail de montage (3, 4) à fixer en bout au premier rail de montage (2) peut être inséré, **caractérisé en ce que** sur les deux branches (22 ; 82) de l'élément récepteur (21 ; 81) sont prévus, pour un élément de blocage (31 ; 51 ; 61), plusieurs logements distants les uns des autres, en vis-à-vis et en forme de fentes (24 ; 83, 84) servant au blocage de rails de montage (3, 4) conformés différemment en hauteur et insérés dans l'élément récepteur au nombre d'au moins un (21 ; 81), les logements (24 ; 83, 84) étant ouverts sur les bords (26 ; 86) de l'élément récepteur (21 ; 81) orientés à l'opposé de la branche (12 ; 72) de la partie centrale (11 ; 71) et comportant, à distance de ces bords (26 ; 86), dans le plan défini par la branche (22 ; 82) de l'élément récepteur (21 ; 81), une partie élargie de préférence triangulaire (27 ; 87) pour créer un nez de verrouillage (25 ; 85).

10. Raccord selon la revendication 9, **caractérisé en ce qu'**il est prévu deux éléments récepteurs (21) de conformation sensiblement identique sur des côtés mutuellement opposés des branches (12) de la partie centrale (11).

11. Raccord selon la revendication 9 ou 10, **caractérisé en ce que** sur la portion de liaison (13) de la partie centrale (11) est prévu un logement pour un élément d'accrochage, de préférence un logement (14) pourvu d'une portion filetée (15).

12. Raccord selon une des revendications 9 à 11, **caractérisé en ce que** la partie centrale (11 ; 71) est rivetée à l'élément récepteur au nombre d'au moins un (21 ; 81).
